(19) Europäisches Patentamt
European Patent Office
Office européen des brevets

(11) **EP 1 290 374 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**09.11.2011 Patentblatt 2011/45**

(45) Hinweis auf die Patenterteilung:
**31.08.2005 Patentblatt 2005/35**

(21) Anmeldenummer: **01943116.2**

(22) Anmeldetag: **18.05.2001**

(51) Int Cl.:
***F21L 4/08*** *(2006.01)*   ***F21W 101/08*** *(2006.01)*
***B60Q 3/02*** *(2006.01)*   ***F21V 21/088*** *(2006.01)*
***F21V 21/096*** *(2006.01)*   ***F21V 5/00*** *(2006.01)*

(86) Internationale Anmeldenummer:
**PCT/DE2001/001895**

(87) Internationale Veröffentlichungsnummer:
**WO 2001/090634 (29.11.2001 Gazette 2001/48)**

(54) **STECKERLEUCHTE**

PLUG-IN LIGHT

LAMPE ENFICHABLE

(84) Benannte Vertragsstaaten:
**AT BE CH CY DE DK ES FI FR GB GR IE IT LI LU MC NL PT SE TR**

(30) Priorität: **22.05.2000 DE 10025000**

(43) Veröffentlichungstag der Anmeldung:
**12.03.2003 Patentblatt 2003/11**

(73) Patentinhaber: **Witte & Sutor GmbH**
**71540 Murrhardt (DE)**

(72) Erfinder: **WÜNSCH, Eberhard**
**97241 Bergtheim-Dipbach (DE)**

(74) Vertreter: **Dreiss**
**Patentanwälte**
**Postfach 10 37 62**
**70032 Stuttgart (DE)**

(56) Entgegenhaltungen:
**DE-A- 3 641 908    DE-A- 19 751 077**
**DE-U- 9 420 913    DE-U- 29 919 032**
**US-A- 1 621 955    US-A- 4 972 172**
**US-A- 4 972 172**

**Beschreibung**

Die Erfindung betrifft eine Steckerleuchte zum Anschluß an einer Anschlußbuchse eines, vorzugsweise 12 V- bzw. 24 V-, Niederspannungsnetzes, insbesondere im Kfz.- Bereich mit einem Leuchtmittel.

Seit jeher besteht insbesondere im Automobilbereich das Problem, daß einerseits bei Nachtfahrten die Fahrgastzelle möglichst unbeleuchtet sein muß, um dem Fahrer das ungestörte Ablesen der Instrumente sowie die Beobachtung der Verkehrssituation zu ermöglichen. Die entsprechende Dunkelschaltung der Fahrgastzelle ist auch wünschenswert, um Verkehrszeichen, Signalleuchten und insbesondere die Beleuchtung der anderen Fahrzeuge umgehend aber möglichst reaktionsschnell wahrnehmen zu können.

Andererseits besteht zumindest seitens der Beifahrer ständig das Bedürfnis, die Fahrzeit möglichst komfortabel zu verbringen. Für irgendwelche Aktivitäten innerhalb des Fahrzeuges ist jedoch eine Grundbeleuchtung des Fahrgastraumes unerläßlich. Dies ist meisten durch entsprechend schwache Lichtquellen sichergestellt.

Um aber beispielsweise einen Blick in eine Karte werfen zu können oder gar lesen zu können, sind erheblich stärkere Lichtquellen erforderlich. Hierzu sind im Zubehörhandel sogenannte Steckerleuchten erhältlich, die beispielsweise mit dem Zigarettenanzünder verbunden werden können und meistens ein relativ stark gebündeltes Licht entwickeln, um einer Ablenkung des Fahrers oder sonstige Blendwirkungen auszuschließen.

Nachteilig bei diesen Steckerleuchten ist, daß sie zumeist mit dem Zigarettenanzünder verbunden werden müssen und deshalb nicht an der Stelle vorhanden sind, wo die Lichtquelle benötigt wird. Hierzu weisen derartige Steckerleuchten zumeist einen sogenannten Flexschlauch auf mit dem die Leuchten innerhalb gewisser Grenzen verstellt wird und positioniert werden können. Sogenannte Flexschläuche weisen in der Regel eine Länge von ca.20 cm auf, so daß die einzelnen Leuchten einigermaßen sperrig sind und im Fahrgastraum als störend empfunden werden.

Schließlich haben sich derartige Leuchten als einigermaßen störanfällig erwiesen, da die im Fahrbetrieb nicht vermeidbaren Erschütterungen sonstigen zum Teil erheblichen Beanspruchungen sehr oft zu Beschädigungen des in diesen Stekkerleuchten enthaltenen Leuchtmittels führen so das in den allermeisten Fällen das als umständlich und störanfällig empfundene Zubehör nach dem zweiten oder dritten Ausfall des Leuchtmittels insgesamt entsorgt werden.

Aus der DE-A-197 51 077 ist zwar eine Sichtanzeige bekannt, die zwar allgemein als Leuchte angesehen werden kann, die jedoch keine Lese-Leuchte mit einer für das Lesen von Karten geeigneten Beleuchtung darstellt. Aus der DE-C-43 22 509 ist eine Beleuchtungseinrichtung, wie sie beispielsweise zur Kennzeichnung von Park- oder Begrenzungsposten verwendet wird, bekannt, die allerdings ebenfalls keine Lese-Leuchte darstellt. Ferner wurde von der Patentinhaberin eine tragbare Taschen- bzw. Handleuchte unter der Bezeichnung "Akkulux LED 2000" vertrieben, die einen aufladbaren Akkumulator für eine Aufladespannung von 110 - 230 VAC, 50 Hz, aufweist.

Der Erfindung liegt die Aufgabe zugrunde, eine Stekkerleuchte zum Anschluss an eine Anschlussbuchse eines Niederspannungsnetzes zu schaffen, die einerseits die beschriebenen Nachteile des Standes der Technik vermeidet und andererseits eine lichtstarke blendfreie Beleuchtung sowie eine insgesamt erhöhten Bedienkomfort bietet.

Die Lösung dieser Aufgabe gelingt durch eine Steckerleuchte mit den Merkmalen des Anspruchs 1.

Dadurch, daß als Leuchtmittel eine Leuchtdiode eingesetzt wird, scheiden die ansonsten möglichen Beschädigungen des Leuchtmittels durch Zerstörung des Glühwendels infolge von Erschütterungen aus, da Leuchtdioden einen anderen Halbleiterwerkstoff enthalten, der beim Überschreiten der Schwellspannung die gewünschte Leuchtwirkung entfaltet. Eine Beschädigung der Leuchtdiode durch Erschütterungen, wie für Glühlampen denkbar, ist daher schon rein technisch unmöglich.

Ein weiterer Vorteil der erfindungsgemäßen Steckerleuchte liegt darin, das diese zum netzunabhängigen Betrieb mit einem Akkumulator versehen ist. Dabei ist der eingesetzte Akkumulator optimalerweise auf die jeweilige Leuchtdiode abgestimmt, indem die Schwellspannung der Leuchtdiode jeweils größer gleich der Entladeschlußspannung des Akkumulators gewählt ist. Die Beachtung dieser Bedingung hat zur Folge, daß für den eingesetzten Stromspeicher ein wirksamer Tiefentladungsschutz gegeben ist. Bei entsprechender Wahl der Schwellspannung der Diode ist sichergestellt, daß nach Unterschreiten der Schwellspannung eine weitere Belastung des Akkus vermieden ist.

Der Entladestrom des Akkus ist hierdurch im wesentlichen dazu auf das Maß der Selbstentladung des Akkus reduziert. Dadurch, daß die Schwellspannung optimalerweise ein wenig über der minimal notwendigen Ladeschlußspannung des Akkus liegt, ist für den Akku eine Tiefentladung technisch unmöglich.

Hierdurch ist eine extreme Langlebigkeit der erfindungsgemäßen Steckerleuchte nicht nur hinsichtlich des Leuchtmittel, sondern auch hinsichtlich der Akkus erreicht, die eine netzunabhängige und dadurch ungebundene Verwendung der erfindungsgemäßen Steckerleuchte ermöglichen.

Die Abstimmung zwischen der eingesetzten Leuchtdiode mit der spezifischen Schwellspannung $U_s$ und dem eingesetzen Stromspeicher mit der spezifischen Entladeschlußspannung $U_0$ wird dadurch erleichtert, daß ein Mehrzellenakku eingesetzt wird. Durch geschickte Auswahl der Zellenzahl z in Bezug zur Schwellspannung $U_s$ der Leuchtdiode kann vergleichsweise einfach der Entladeschutz für den Akkumulator sichergestellt werden.

In vorteilhafter Ausgestaltung werden in Verbindung mit der erfindungsgemäßen Steckerleuchte Nikkel-Metall-Hydrid-Akkumulatoren (NiMH-Akkus) eingesetzt.

Die Steckerleuchte ist in Verbindung mit einem robusten, im wesentlichen dreiteiligen Gehäuse ausgeführt, daß im wesentlichen aus den zur Aufnahme in der Anschlußbuchse vorgesehenen zylindrischen Steckerteil, einer Kontaktplatte und einem, im eingesteckten Zustand die Anschlußbuchse überragenden Leuchtenkopf, der über einen Ringflansch mit dem genannten Steckerteil verbunden ist, besteht. Dabei ist die um einer Stirnseite des Steckerteils befindliche Kontaktplatte als Pluspol und eine wenigstens an einer Seite des Steckerteils angeordnete elektrisch leitende Kontaktfeder oder das metallische Gehäuse des Steckerteils als Minuspol ausgebildet.

In vorteilhafter Ausgestaltung weist die Stekkerleuchte einen Federclip auf, der zur Befestigung der Steckerleuchte an geeigneter Stelle dienen kann. Beispielsweise kann die von einer Versorgungsspannung unabhängige Steckerleuchte an die Kleidung gesteckt, an einer Sonnenblende befestigt oder sonstig an geeigneter Stelle angebracht werden, umso als feststehendes Beleuchtungselement zu dienen.

In Weiterbildung dieser Ausgestaltung ist der Federclip selbst elektrisch leitend ausgeführt, so daß er an Stelle der beschriebenen elektrischen Kontaktfeder als Minuspol den elektrischen Kontakt in der dafür vorgesehenen Anschlußbuchse vermitteln kann.

Die der Anschlußbuchse zugewandte Stirnseite des Steckerteils ist mit einer Kontaktplatte verbunden, die Ihrerseits einen das Steckerteil konzentrisch überragenden Aufstellwulst aufweist. Diese verbreiterte Querschnittsfläche stellt einerseits eine verbesserte Kontaktierung der Stekkerleuchte innerhalb der Anschlußbuchse sicher und erleichtert überdies das Aufstellen der Lampe, die so beispielsweise auf einen Tisch oder eine sonstige Ablage gestellt werden kann. Dies wird aufgrund der zylindrisch Ausgestaltung des Gehäuses als vorteilhaft empfunden, weil ansonsten ständig ein Wegrollen und damit ein Verlieren der Steckerleuchte befürchtet werden muß. Beim Einschieben der Stekkerleuchte in den Zigaretten-Anzünder-Anschluß eines Fahrzeuges rasten der Aufstellwulst in eine buchseninterne federnde Halterung ein.

Die Standfestigkeit oder die Befestigungsmöglichkeiten der Steckerleuchte können weiter dadurch erhöht werden, so daß in die Kontaktplatte eine Magnetplatte integriert ist, die es ermöglicht, die Steckerleuchte beispielsweise mit einem Stück des Innenraumblechs so zu verbinden, daß die Steckerleuchte hier angeheftet ist. Auf diese Art kann die Stekkerleuchte als vielseitig verwendbare Lichtquelle im Fahrzeugbereich und anderswo eingesetzt werden.

Die Leuchtdiode ist mit Vorteil konzentrisch innerhalb der Steckerleuchte insbesondere im Bereich des Steckerteils oder im Bereich des Leuchtenkopfs angeordnet, wobei der Leuchtenkopf eine vorzugsweise transparente materialverschlossene Lichtaustrittsöffnung aufweist.

In weiterer Ausgestaltung sind im Strahlgang der als Leuchtmittel eingesetzten Leuchtdiode zusätzlich eine Linse und ein Kondensor angeordnet. Hierdurch kann je nach eingesetzter Linse eine Bündelung oder Streuung des erzeugten Lichtes erreicht werden.

In alternativer Ausgestaltung kann der Steckerleuchte auch eine Umlenkeinrichtung vorzugsweise in Form eines gekrümmten Lichtleiter zugeordnet sein, wobei gleichzeitig der Leuchtenkopf eine seitliche Lichtaustrittsöffnung aufweist und hierdurch eine Umlenkung des Strahlgangs der Leuchtdiode innerhalb der Steckerleuchte erfolgt und ein Lichtaustritt aus der Seitenwandung der Steckerleuchte erfolgt.

Auch bei dieser Ausgestaltung können zusätzliche Lichteffekte durch die Verwendung einer Zusatzlinse zur Bündelung oder Streuung des Lichtes erreicht werden.

In vorteilhafter Ausgestaltung kann der Leuchtenkopf im Falle eines seitlichen Lichtaustritts als bedruckbare Oberfläche oder mit einer weiteren Leuchtdiode beispielsweise zur Anzeige des jeweiligen Ladezustands des Akkus genutzt werden. Dies ist insbesondere deshalb wertvoll, weil diese Oberfläche des Leuchtenkopfs auch dann sichtbar ist, wenn die Steckerleuchte betriebsgemäß in die Anschlußbuchse eingesteckt ist.

Dadurch, daß der Leuchtenkopf mit dem Ringflansch durch ein Schraubgewinde verbunden ist und üblicherweise innerhalb des Ringflansches die Linse gehalten ist und im Leuchtenkopf der Kondensor befestigt ist, kann mittels des Schraubgewindes der Abstand zwischen Linse und Kondensor verstellt werden. Hierdurch kann durch einfaches Drehen des Leuchtenkopfes relativ zum Ringflansch der Brennpunkt der Steckerleuchte verstellt und den jeweiligen Bedürfnissen angepaßt werden.

Das Gehäuse der Steckerleuchte ist in herkömmlicher Spritzgußtechnik gefertigt und dabei mit einem teparaturresistenten Kunststoff gearbeitet, der die insbesondere im Kfz.-Bereich üblichen, .z.T. extremen Temperaturschwankungen ohne weiteres verarbeiten kann.

Die Erfindung wird nachstehend anhand eines in der Zeichnung dargestellten Ausführungsbeispiel näher erläutert. Es zeigen:

Figur 1    eine Steckerleuchte in einer Seitenansicht,

Figur 2    eine andere Steckerleuchte in einer anderen Seitenansicht,

Figur 3    die Steckerleuchte nach Figur 2 in einer Ansicht von schräg unten,

Figur 4    eine Steckerleuchte mit einem Lichtaustritt in Achsrichtung in einer Detailansicht und Schnittdarstellung,

Figur 5    eine andere Steckerleuchte mit Lichtaustritt in Achsrichtung in einer Detailansicht und Schnittdarstellung,

Figur 6 eine Steckerleuchte mit Lichtaustritt quer zur Achsrichtung in einer Detailansicht und Schnittdarstellung und

Figur 7 eine andere Steckerleuchte mit Lichtaustritt quer zur Achsrichtung in einer Detailansicht und Schnittdarstellung.

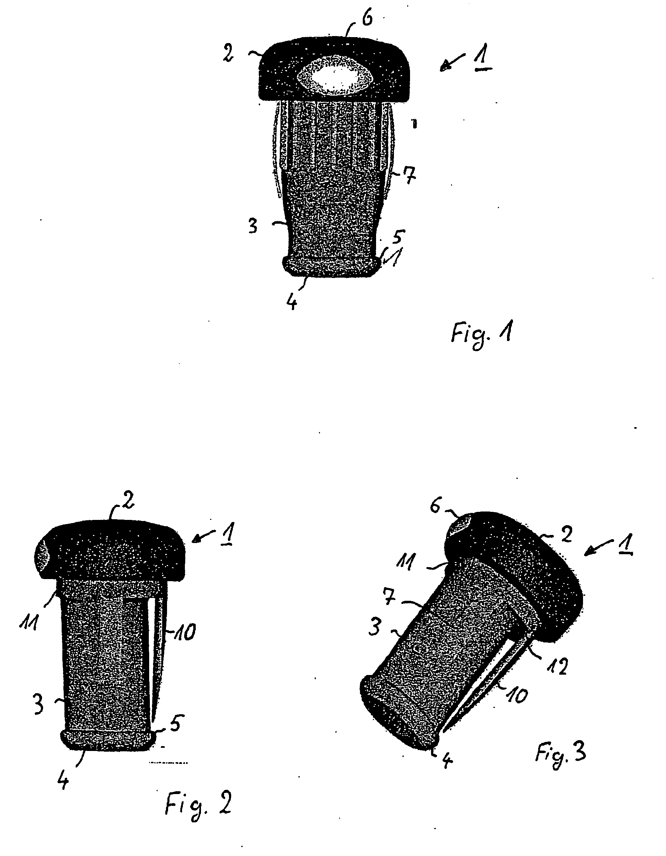

Die in Figur 1 gezeigte Steckerleuchte 1 weist im wesentlichen einen Leuchtenkopf 2 und ein im wesentlichen zylindrisches Steckerteil 3 mit einer stirnseitigen Kontaktplatte 4 auf.

Die Kontaktplatte 4 stellt den Pluspol zum Anschluß der Steckerleuchte 1 her.

Dabei ist die Kontaktplatte 4 mit einem umlaufenden Aufstellwulst 5 versehen, der der Steckerleuchte 1 einen größere Stellfläche und somit eine größere Standsicherheit verleiht und überdies für eine sichere Kontaktierung innerhalb der Anschlußbuchse sorgt.

In diese Kontaktplatte 4 ist in nicht weiter dargestellter Weise eine stirnseitige Vertiefung zur Aufnahme einer Magnetplatte eingelassen. Die Magnetplatte dient dazu, die Steckerleuchte 1 ggf. an metallische Gegenstände anheften zu können.

Der Leuchtenkopf 2 weist eine seitliche Leuchtöffnung 6 zum Strahlaustritt der innerhalb des Steckerteils 3 oder des Leuchtenkopfs 2 angeordneten Leuchtquelle auf.

Der Minuspol der Steckerleuchte 1 wird durch die seitlich angeordneten metallischen Kontaktfederelemente 7 oder das metallische Gehäuse des Steckerteils 3 gebildet. Die Kontaktfederelemente 7 und/oder das Steckerteil 3 geraten beim Einschieben der Steckerleuchte 1 in die Anschlußbuchse in leitende Verbindung mit der den Gegenpol bildenden Innenwandung der Buchse. Die in der Zeichnung nicht weiter dargestellten Akkumulatoren der Steckerleuchte 1 werden in dieser Stellung geladen.

Figur 2 zeigt eine alternative Ausgestaltung einer Steckerleuchte 1. Es handelt sich dabei ebenfalls um eine Steckerleuchte 1 mit einem Leuchtenkopf 2 mit einer seitlichen Leuchtöffnung 6. Im Unterschied zu der in Figur 1 gezeigten Steckerleuchte 1 ist die hier gezeigte Steckerleuchte 1 mit einem Federclip 10 ausgestattet.

Der Federclip 10 ist an einen zwischen den Leuchtenkopf 2 und dem Steckerteil 3 angeordneten Ringflansch 11 angelegt. Der Ringflansch 11 weist einen gegenüber dem Steckerteil 3 vergrößerten Durchmesser auf und ist überdies mit einer asymmetrischen Haltenase 12 zur beabstandeten Anlenkung des Federclips 10 versehen. So kann der Federclip 10 in nicht weiter dargestellter Weise ebenfalls als Kontaktfederelement 7 ausgestaltet sein.

Bei beiden in Figur 1 und Figur 2 gezeigten Ausführungen sind seitliche Leuchtöffnungen 6 vorhanden, so daß die stirnseitige Oberfläche des Leuchtenkopf 2 als bedruckbare Oberfläche oder mit entsprechenden Zusatzelementen wie Anzeigeinstrumenten ausgestaltet sein kann.

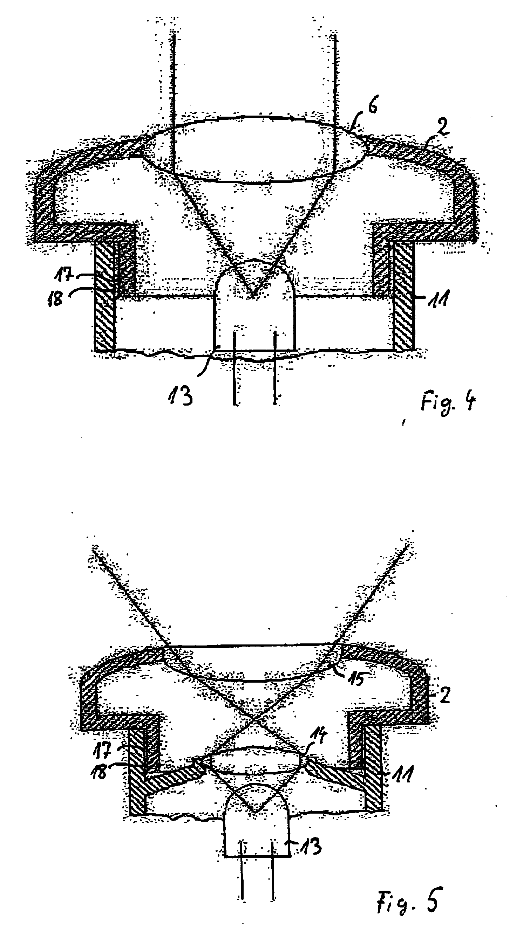

Figur 4 zeigt in einer Detailansicht und Schnittdarstellung eine Steckerleuchte deren Strahlgang im wesentlichen parallel bez. in gedachter Verlängerung der zentralen Zylinderachse der Steckerleuchte 1 liegt. Als Leuchtmittel ist innerhalb der Steckerleuchte 1 eine Leuchtdiode (LED) 13 angeordnet. Dabei kann die Leuchtdiode 13 im Bereich des Ringflansches 11 aber auch im Bereich des Steckerteils 3 angeordnet sein.

Bei einer Ausführung im Sinne der Figur 4 weist der Leuchtenkopf 2 eine zentrale Leuchtöffnung 6 im Bereich der stirnseitigen Oberfläche des Leuchtenkopfes 2 auf. Bei der hier gezeigten Ausführung sind sowohl die Leuchtdiode 13, als auch die Leuchtöffnung 6 zentral und konzentrisch zur symmetrischen Zentralachse des zylindrischen Steckerteils 3 angeordnet.

Die Leuchtöffnung 6 ist üblicherweise mit einer transparenten Oberfläche verschlossen. Die Leuchtöffnung 6 muß allerdings nicht in jedem Fall geschlossen ausgeführt sein. In weiterer Ausgestaltung kann im Strahlgang der Leuchtdiode 13 eine Linse 14 zur Bündelung der mittels der Leuchtdiode 13 erzeugten Strahlung angeordnet sein.

Die Linse 14 wird in Figur 5 gezeigten Ausführung mittels des Ringflansches 11 befestigt. Im weiteren Strahlgang der Leuchtdiode ist ein Kondensor 15 angeordnet. Der Kondensor kann im Bereich der Leuchtöffnung 6 angeordnet sein, so daß als Optik der Steckerleuchte 1 ein Linsen-Kondensor-System zur Auskopplung des Lichtes aufgebaut ist.

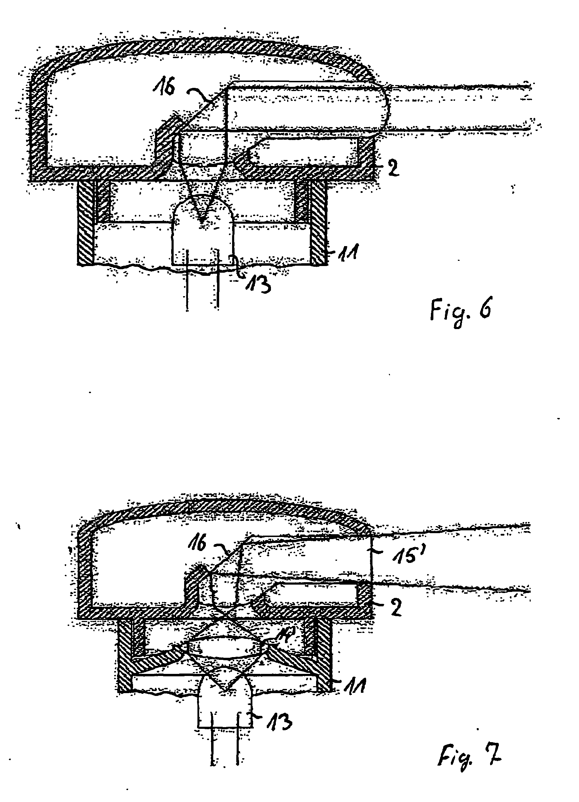

Um gemäß Figur 6 einen seitlichen Lichtaustritt zu ermöglichen, muß im Strahlgang der Leuchtdiode 13 eine Umlenkeinrichtung 16, beispielsweise in Form eines gekrümmten Lichtleiters angeordnet sein. Dabei kann der Lichtleiter gleichzeitig als Linse ausgeführt sein oder gemäß Figur 7 erneut im Bereich des Ringflanschs 11 eine Zusatzlinse 14 im Strahlgang hinter der Leuchtdiode 13 angeordnet sein. In diesem Fall ist der Lichtleiter gleichzeitig als Kondensor 15 ausgebildet. Anstelle der Linse 15 könnte auch ein gewöhliches Prisma im Strahlgang der Leuchtdiode 13 angeordnet sein.

Bei sämtlichen Ausführungen gemäß den Figuren 4 bis 7 ist der Leuchtenkopf 2 über ein entsprechendes Außengewinde 17 mit dem Ringflansch 11 verbunden, der ein entsprechendes Innengewinde 18 aufweist.

Durch die Gewindeverbindung des Leuchtenkopfs 2 mit dem Ringflansch 11 kann der Abstand zwischen der innerhalb des Ringflansches befestigten Linsen 14, 14' relativ zu dem innerhalb des Leuchtenkopfs 2 befestigten Kondensor 15,15' verstellt werden. Hierdurch wird die Brennweite bez. der Brennpunkt der Steckerleuchte 1 verstellt.

Die Steckerleuchte 1 wird durch weiteres Verdrehen des Leuchtenkopfs 2 relativ zum Steckerteil 3 ein- und ausgeschaltet.

Nachstehend wird noch einmal zusammenfassend die Funktion der beschriebenen Steckerleuchte 1 anhand der erwähnten Ausführungsbeispiele erläutert:

Die erfindungsgemäße Steckerleuchte 1 dient zum Einstecken in eine 12 V- bzw. 24 V-Anschlußbuchse. Dabei kann die Steckerleuchte 1 durch Verdrehen des Leuchtenkopfs 2 relativ zum Steckerteil 3 ein- und ausgeschaltet werden. Um die Steckerleuchte 1 ortsunabhängig einsetzen zu können, ist sie mit nicht weiter dargestellten Akkumulatoren versehen, die eine netzunabhänige Versorgung der Steckerleuchte 1 ermöglichen. Die Akkumulatoren werden üblicherweise innerhalb einer Anschlußbuchse geladen. In vorteilhafter Ausgestaltung kann die Steckerleuchte 1 mit einem Federclip 10 und/oder mit einem Haltemagneten versehen sein, um die Steckerleuchte 1 nicht nur mobil, sondern auch ortsfest einsetzen zu können. Die Steckerleuchte 1 kann entweder als Frontstrahler oder als Seitstrahler ausgeführt sein. Die Ausbildung als Seitstrahler ermöglicht es, den Leuchtenkopf 2 der Steckerleuchte 1 als zusätzliches Anzeige oder Werbemedium einzusetzen.

Durch einfaches Drehen des Leuchtenkopfes 2 relativ zum Ringflansch 11 kann der Brennpunkt der Steckerleuchte 1 den wechselnden Umständen angepaßt werden.

## Patentansprüche

1.  Lese-Steckerleuchte (1) zum Anschluss an eine Anschlussbuchse eines, vorzugsweise 12 V-bzw. 24 V-, Niederspannungsnetzes, insbesondere im Kfz.-Bereich,
    die eine lichtstarke und blendfreie Beleuchtung zum Lesen von Karten bietet,
    mit einem als Akkumulator ausgebildeten Stromspeicher zur netzunabhängigen Spannungsversorgungder Stekkerleuchte (1),
    wobei als Leuchtmittel eine Leuchtdiode (13) eingesetzt wird,
    wobei der Akkumulator und die Leuchtdiode (13) derart aufeinander abgestimmt sind, dass die Schwellspannung (Us) der Leuchtdiode (13) größer, gleich einer Entladeschlussspannung (Uo) des jeweiligen Akkus ist,
    wobei der Akkumulator mehrere Zellen aufweist,
    wobei die Zahl (z) der Zellen, die Entladeschlussspannung (Uo) der Akkuzellen und die Schwellspannung (Us) der Leuchtdiode (13) so gewählt ist, dass jeweils gilt :

    $$Us \geq Uo * z \, ,$$

    so dass nach dem Unterschreiten der Schwellspannung (Us) eine weitere Belastung des Akkumulators vermieden wird und ein Tiefentladeschutz für den Akkumulator gegeben ist.

2.  Steckerleuchte nach Anspruch 1 oder 2, **dadurch gekennzeichnet, daß** es sich bei dem Akkumulator um einen Nickel-MetallHydrid-Akku handelt.

3.  Steckerleuchte nach einem der vorhergehenden Ansprüche, mit einem im wesentlichen zylindrischen Gehäuse und mit einem zur Aufnahme in einer Anschlußbuchse vorgesehenen zylindrischen Steckerteil (3), das auf der, der Anschlußbuchse zugewandten Stirnseite mit einer Kontaktplatte (4) abgeschlossen ist und dessen andere Stirnseite mit einem knopfartigen.Leuchtenkopf (2) versehen ist, der über einen Ringflansch (11) mit dem Steckerteil (3) verbunden ist, wobei an dem Ringflansch (11) wenigstens ein Kontaktfederelement (7) derart angelenkt ist, daß dieses Kontaktfederelement (7) im bestimmungsgemäßen Zustand an der Innenwandung der Anschlußbuchse elektrisch leitend anliegt.

4.  Steckerleuchte nach Anspruch 3, **dadurch gekennzeichnet, daß** der Ringflansch (11) eine gegenüber den zylindrischen Steckerteil (3) vergrößerten Querschnitt mit einer Haltenase(12) aufweist, an dem ein Federclip (10) derart angelenkt ist, daß dieser Federclip (10) in seiner Längserstreckung beabstandet aber im Übrigen im wesentlichen parallel zu einem Wandabschnitt des Steckerteils (3) sich von dem Ringflansch (11) in Richtung zur Kontaktplatte (4) erstreckt.

5.  Steckerleuchte nach Anspruch 4, **dadurch gekennzeichnet, daß** der Federclip (10),als elektrisch leitendes Kontaktfederelement (7) ausgestaltet ist.

6.  Steckerleuchte nach Anspruch 4 oder 5, **dadurch gekennzeichnet, daß** die Kontaktplatte (4) einen gegenüber dem Querschnitt des Steckerteils (3) vergrößerten Querschnitt dadurch aufweist, daß am Außenumfang ein, den Querschnitt des Steckerteils (3) konzentrisch überragender Aufstellwulst (5) vorgesehen ist.

7.  Steckerleuchte nach Anspruch 6, **dadurch gekennzeichnet, daß** die Kontaktplatte(4) mit einer innenliegenden, vorzugsweise konzentrisch angeordneten Vertiefung zur Aufnahme einer Magnetplatte derart versehen ist.

8.  Steckerleuchte nach einem der vorhergehenden Ansprüche, **dadurch gekennzeichnet, daß** innerhalb des Steckerteils (3) oder des Ringflansches (11) oder des Leuchtenkopfs (2) eine Leuchtdiode (13) angeordnet ist und im Strahlgang dieser Leuchtdiode (13).der Leuchtenkopf (2)eine Leuchtöffnung (6), die vorzugsweise mit einem transparenten Material verschlossen ist, vorgesehen ist.

9.  Steckerleuchte nach Anspruch 8, **dadurch gekenn-**

**zeichnet, daß** die Leuchtöffnung(6) derart konzentrisch zur zentralen Zylinderachse der Steckerleuchte (1)angeordnet ist, daß ein Strahlaustritt im wesentlichen in Richtung dieser gedachten zentralen Zylinderachse erfolgt.

10. Steckerleuchte nach Anspruch 8 oder 9, **dadurch gekennzeichnet, daß** im Strahlgang der Leuchtdiode (13) eine Linse (14), die vorzugsweise innerhalb des Ringflansches (11) konzentrisch gehalten ist und ein Kondensor (15), der vorzugsweise im Bereich der Leuchtöffnung (6) des Leuchtenkopfes (2) gehalten ist, konzentrisch angeordnet ist.

11. Steckerleuchte nach Anspruch 10,**dadurch gekennzeichnet, daß** im Strahlgang der Leuchtdiode ( 13), vorzugsweise im Bereich des Leuchtenkopfes (2), eine Umlenkeinrichtung (16),vorzugsweise in Form eines gekrümmten Lichtleiters, angeordnet ist und der Leuchtenkopf (2) eine Leuchtöffnung (6) im Bereich seiner zylindrischen Außenwandung derart aufweist, daß der Strahlaustritt im wesentlichen senkrecht zur zentralen Zylinderachse der Steckerleuchte (1) erfolgt.

12. Steckerleuchte nach Anspruch 11, **dadurch gekennzeichnet, daß** im Bereich des Ringflansches (11) im Strahlgang der Leuchtdiode (13) eine Linse (14')angeordnet ist und die Umlenkeinrichtung (16) entweder zusätzlich als Kondensor (15')ausgebildet ist und oder auf einem Bereich der Leuchtöffnung (6) angeordneten Kondensor (15') einstrahlt.

13. Steckerleuchte nach Anspruch 11 oder 12, **dadurch gekennzeichnet, daß** die stirnseitige Oberfläche des Leuchtenkopfes (2) als geschlossene bedruckbare Oberfläche ausgebildet ist.

14. Steckerleuchte nach einem der Ansprüche 8 bis 13, **dadurch gekennzeichnet, daß** der Leuchtenkopf (2) über ein Gewinde (17, 18) mit dem Ringflansch (11) verbunden ist und hierdurch der Leuchtenkopf (2) relativ zum Ringflansch (11) verdrehbar und hierdurch den jeweiligen Abstand zwischen der mittels des Ringflansches (11) gehaltenen Linse (14,14') und des mittels des Leuchtenkopfes (2) gehaltenen Kondensors (15,15') verstellbar ist.

15. Steckerleuchte nach einem der vorhergehenden Ansprüche, **dadurch gekennzeichnet, daß** das Steckergehäuse (3)'vorzugsweise im Spritzgußverfahren, aus einem Kunststoff hergestellt ist, dessen Temperaturresistenz in einem Bereich von wenigstens

$$-20°C \le t \le 45°C$$

liegt.

**Claims**

1. A reading plug-in light (1) for connection to a connection socket of a preferably 12 volt or 24 volt low-voltage supply, in particular in the automotive area, providing a light intense and blinding-free lighting for reading road maps,
with a current storage being an accumulator for supplying the plug-in light (1) with voltage independently of the low-voltage supply,
wherein a light-emitting diode (13) is used as a light source,
wherein the accumulator and the light-emitting diode (13) are matched with each other in such a manner that the threshold voltage ($U_s$) of the light-emitting diode (13) is higher than or equal to the final discharge voltage ($U_0$) of the respective accumulator,
wherein the accumulator comprises a plurality of cells,
wherein the number (z) of the cells, the final discharge voltage ($U_0$) of the accumulator cells and the threshold voltage ($U_s$) of the light-emitting diode (13) are selected in such a manner that the following applies in each case:

$$U_S \ge U_0 * z,$$

so that after falling short of threshold voltage ($U_s$) a further loading of the accumulator is avoided and a deep discharge protection is provided for the accumulator.

2. The plug-in light according to claim 1, **characterized in that** the accumulator is a nickel-metal-hydride accumulator.

3. The plug-in light according to any one of the preceding claims, with a substantially cylindrical housing and a cylindrical plug component (3) provided to be received in a connection box, said plug component being terminated on the face side facing the connection socket by a contact plate (4), and whose other face side being provided with a button-like light head (2) connected with the plug component (3) via a ring flange (11), whereby at least one contact spring element (7) is articulated on the ring flange (11) in a manner such that in the intended condition, said contact spring element (7) rests electrically conducting against the inner wall of the connection socket.

4. The plug-in light according to claim 4, **characterized in that** the ring flange (11) has an enlarged cross section versus the cylindrical plug component (3) with a holding nose (12), on which a spring clip (10) is articulated in such a manner said spring clip (10) extends with its longitudinal expanse with a spacing, but otherwise substantially parallel with a wall section of the plug component (3) from the ring flange (11) in the direction of the contact plate (4).

5. The plug-in light according to claim 4, **characterized in that** the spring clip (10) is designed in the form of an electrically conducting contact spring element (7).

6. The plug-in light according to claim 4 or 5, **characterized in that** the contact plate (4) has a cross section enlarged versus the cross section of the plug component (3) on account of the fact that provision is made on the outer circumference for a set-up bead (5) concentrically projecting beyond the cross section of the plug component (3).

7. The plug-in light according to claim 6, **characterized in that** the contact plate (4) is provided with a preferably concentrically arranged recess for receiving a magnetic plate, said recess being disposed on the inside.

8. The plug-in light according to any one of the preceding claims, **characterized in that** a light-emitting diode (13) is arranged within the plug component (3) or the ring flange (11) or the light head (2); and that in the path of the rays of said light-emitting diode (13), the light head (2) has a light outlet opening (6) preferably closed with a transparent material.

9. The plug-in light according to claim 8, **characterized in that** the light outlet opening (6) is arranged concentrically with the central cylinder axis of the plug-in light (1) in a manner such that the light beam exists substantially in the direction of said imagined central cylinder axis.

10. The plug-in light according to claim 8 or 9, **characterized in that** a lens (14) is concentrically supported in the path of the rays of the light-emitting diode (13) preferably within the ring flange (11); and that a condenser (15) is concentrically arranged preferably within the area of the light outlet opening (6) of the light head (2).

11. The plug-in light according to claim 10, **characterized in that** a reversing device (16) preferably in the form of a curved light conductor is arranged preferably within the area of the light head (2); and that the light head (2) has a light outlet opening (6) in the area of its cylindrical outer wall in a manner such that the light beam exits substantially perpendicular to the central cylinder axis of the plug-in light (1).

12. The plug-in light according to claim 11, **character-**

**ized in that** a lens (14') is arranged in the area of the ring flange (11) in the path of the rays of the light-emitting diode (13); and that the reversing device (16) is either additionally designed as a condenser (15') or radiates upon a condenser (15') arranged in the area of the light outlet opening (6).

13. The plug-in light according to claim 11 or 12, **characterized in that** the face-side surface of the light head (2) is designed as a closed, imprintable surface.

14. The plug-in light according to any one of claims 8 to 13, **characterized in that** the light head (2) is connected with the ring flange (11) via a thread (17, 18) and the light head (2) can be rotated in this way relative to the ring flange (11) and the spacing between the lens (14, 14') supported by means of the ring flange (11), and the condenser (15, 15') supported by means of the light head (2) is adjustable in this way.

15. The plug-in light according to any one of the preceding claims, **characterized in that** the plug component housing (3) is preferably produced from a plastic with a temperature resistance in the range of at least.

$$-20°C \leq t \leq 45\,C.$$

**Revendications**

1. Lampe de lecture enfichable (1) pour le branchement à une prise de courant d'un réseau, de preference d'un résau basse tension 12 V ou 24 V, en particulier dans le secteur automobile,

qui offre un éclairage lumineux et anti-éblouissement pour la lecture de cartes,

avec un accumulateur de courant configuré comme un accumulateur pour l'alimentation de la lampe enfichable (1) indépendamment du réseau,

sachant que une diode électroluminescente (13) est utilisée comme element éclairant, sachant que l'accumulateur et la diode électroluminescente (13) sont adaptés l'un à l'autre de telle sorte que la tension de seuil $(U_s)$ de la diode électroluminescente (13) est plus grande ou égale à une tension de fin de décharge $(U_o)$ de l'accumulateur respectif,

sachant que l'accumulateur comporte plusieurs elements,

sachant que le nombre des elements (z), la tension de fin de décharge $(U_o)$ des éléments de l'accumulateur et la tension de seuil $(U_s)$ de la diode électroluminescente (13) sonst choisis tels que l'on a respectivement:

$$U_s \geq U_0 * z,$$

de sorte que, après avoir chuté sous la tension de seuil ($U_s$), une contrainte supplémentaire sur l'accumulateur peut être evitée et une protection contre la décharge basse est donnée.

2. Lampe enfichable selon la revendication 1 ou 2, **caractérisée en ce que**
il s'agit, en ce qui concerne l'accumulateur, d'un accumulateur au nickel - hydrure métallique.

3. Lampe enfichable selon l'une des revendications précédentes, avec un boîtier essentiellement cylindrique et avec une partie enfichable cylindrique (3) prévue pour le logement dans une prise de courant qui est fermée sur la face frontale tournée vers la prise de courant par une plaque de contact (4) et dont l'autre face frontale est dotée d'une tête éclairante (2) en forme de bouton qui est reliée par une bride annulaire (11) à la partie enfichable (3), sachant que sur la bride annulaire (11), au moins un élément de contact élastique (7) est articulé de telle sorte que, dans l'état conforme, cet élément de contact élastique (7) repose de façon conductrice de l'électricité contre la paroi intérieure de la prise de courant.

4. Lampe enfichable selon la revendication 3, **caractérisée en ce que** la bride annulaire (11) présente en comparaison de la partie enfichable (3) cylindrique une section agrandie avec un tenon (12), sur lequel un clip élastique (10) est articulé de telle sorte que ce clip élastique (10) s'étend de la bride annulaire (11), à distance dans son extension longitudinale mais par ailleurs essentiellement parallèlement à une section de paroi de la partie enfichable (3), en direction de la plaque de contact (4).

5. Lampe enfichable selon la revendication 4, **caractérisée en ce que** le clip élastique (10) est configuré comme élément de contact élastique (7), conducteur de l'électricité.

6. Lampe enfichable selon la revendication 4 ou 5, **caractérisée en ce que** la plaque de contact (4) présente une section agrandie par rapport à la section de la partie enfichable (3) **en ce qu'**un bourrelet d'appui (5) dépassant concentriquement la section de la partie enfichable (3) est prévu à la périphérie extérieure.

7. Lampe enfichable selon la revendication 6, **caractérisée en ce que** la plaque de contact (4) est dotée d'un renfoncement intérieur, disposé de préférence concentriquement, pour recevoir une plaque magnétique.

8. Lampe enfichable selon l'une des revendications précédentes, **caractérisée en ce qu'**une diode électroluminescente (13) est disposée à l'intérieur de la partie enfichable (3) ou de la bride annulaire (11) ou de la tête éclairante (2) et **en ce que** dans le trajet des rayons de cette diode électroluminescente (13), il est prévu dans la tête éclairante (2) une ouverture d'éclairage (6) qui est fermée de préférence par un matériau transparent.

9. Lampe enfichable selon la revendication 8, **caractérisée en ce que** l'ouverture d'éclairage (6) est disposée concentriquement à l'axe central du cylindre de la lampe enfichable (1) de telle sorte qu'une sortie du faisceau s'effectue essentiellement dans la direction de cet axe central virtuel du cylindre.

10. Lampe enfichable selon la revendication 8 ou 9, **caractérisée en ce que** dans le trajet du faisceau de la diode électroluminescente (13) sont disposés concentriquement une lentille (14), qui est maintenue de préférence à l'intérieur de la bride annulaire (11) et un condenseur (15) qui est maintenu de préférence dans la zone de l'ouverture d'éclairage (6) de la tête éclairante (2).

11. Lampe enfichable selon la revendication 10, **caractérisée en ce que** dans le trajet du faisceau de la diode électroluminescente (13), de préférence dans la zone de la tête éclairante (2), est disposé un dispositif de renvoi (16), de préférence sous la forme d'un guide de lumière coudé, et **en ce que** la tête éclairante (2) comporte une ouverture d'éclairage (6) dans la zone de sa paroi extérieure cylindrique, de telle sorte que la sortie du faisceau s'effectue essentiellement perpendiculairement à l'axe central du cylindre de la lampe enfichable (1).

12. Lampe enfichable selon la revendication 11, **caractérisée en ce que** dans la zone de la bride annulaire (11), une lentille (14') est disposée dans le trajet du faisceau de la diode électroluminescente (13), et **en ce que** le dispositif de renvoi (16) soit est configuré en plus comme condenseur (15'), soit est dirigé sur un condenseur (15') disposé dans une zone de l'ouverture d'éclairage (6).

13. Lampe enfichable selon la revendication 11 ou 12, **caractérisée en ce que** la surface frontale de la tête éclairante (2) est configurée comme surface imprimable fermée.

14. Lampe enfichable selon l'une des revendications 8 à 13, **caractérisée en ce que** la tête éclairante (2) est reliée par un pas de vis (17, 18) à la bride annulaire (11) et **en ce que** par là la tête éclairante (2) peut tourner par rapport à la bride annulaire (11), moyennant quoi la distance respective entre la lentille (14, 14') maintenue au moyen de la bride annulaire (11) et le condenseur (15, 15') maintenu au moyen de la tête éclairante (2) est réglable.

15. Lampe enfichable selon l'une des revendications précédentes, **caractérisée en ce que** le boîtier de la partie enfichable (3) est fabriqué, de préférence selon le procédé par injection, en un plastique dont la résistance à la température est située dans un intervalle d'au moins

$$-20\ °C \leq t \leq 45\ °C$$

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19751077 A
- DE 4322509 C